# EUROPEAN PATENT APPLICATION

(11) **EP 1 713 279 A1**
(43) Date of publication of application: **18.10.2006**
(21) Application number: 06007377.2
(22) Date of filing: 07.04.2006
(51) Int. Cl.: H04N 7/26

(54) **Image data decoding apparatus and method**

(30) Priority: 14.04.2005 JP 2005116946
(71) Applicant: NEC Electronics Corporation, Kawasaki, Kanagawa 211-8668 (JP)
(72) Inventor: Matsubara, Katsushige, Kawasaki Kanagawa 211-8668 (JP)
(74) Representative: Baronetzky, Klaus

(57) **Abstract**

An image data decoding apparatus according to an embodiment of the invention includes: a variable length coder/decoder (2) for decoding compressed image data to output a quantization coefficient; a non-zero coefficient detector (3) for examining whether or not the quantization coefficient includes a non-zero coefficient for each examination unit; a quantization coefficient FIFO (5) for storing, if the examination unit includes one or more non-zero coefficients, the quantization coefficient of the examination unit as a significant coefficient; a significant coefficient flag FIFO (4) for storing a significant coefficient flag that indicates whether or not the examination unit is a significant coefficient, and a zero coefficient generator (6) for reconstructing the quantization coefficient based on the significant coefficient flag and significant coefficient.

## Description

### BACKGROUND OF THE INVENTION

### 1. Field of the Invention

The present invention relates to an image data decoding apparatus and method for decoding compressed image data. In particular, the invention relates to an image data decoding apparatus and method that improve a processing speed at the time of decoding highly compressed image data based on such as the MPEG (Moving Picture Expert Group)-2, H.264, or VC-1 (WMV9).

### 2. Description of Related Art

New codecs such as H.264 and VC-1 intended for next-generation DVDs (digital versatile disks) or DTVs (digital televisions) are more advantageous than MPEG-2 in terms of the following points.
1) An efficiency for intra prediction (motion prediction) is improved to reduce data to be compressed (non-zero coefficient).
2) A precision of variable length coding/decoding processing is improved.
3) Encoded data is further compressed based on code prediction processing or arithmetic coding to realize high-level compression.

The above highly compressed image data is decoded by an image data decoder (see Japanese Unexamined Patent Application Publication No.2002-112268, for instance). Fig. 15 is a block diagram showing a conventional image data decoding apparatus. For example, the image data decoding apparatus decodes image data including a variable length code. The variable length code is generated as below. In first, the image signals or a prediction error signal representing an error between an image signal and a prediction signal are performed on discrete cosine transform (DCT), on the basis of block including plural pixels. Then, the resulting DCT coefficient including a non-zero coefficient and a zero coefficient is quantized and subjected to scan-conversion in accordance with a predetermined scan pattern. After that, a pair of 0 run length representing the run length of zero coefficients and its subsequent non-zero coefficient is subjected to variable length coding.

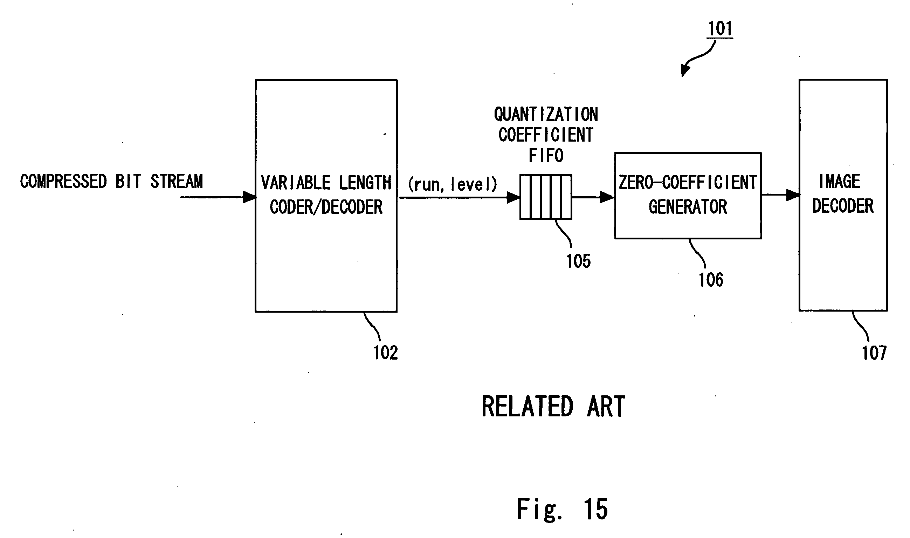

A conventional image data decoding apparatus 101 of Fig. 15 includes a variable length coder/decoder 102, a quantization coefficient FIFO 105, a zero coefficient generator 106, and an image decoder 107, and generates a decoded image signal from compressed image data (compressed bit stream). The variable length coder/decoder 102 receives the compressed bit stream, decodes the received data, and outputs a coefficient including a pair (run, level) (a pair of 0 run length and non-zero coefficient). Here, the "level" represents a value of the quantization coefficient (non-zero coefficient), and the "run" represents the number of 0 values preceding the "level" (0 run length).

The quantization coefficient FIFO 105 stores the coefficient as the pair (run, level) decoded by the variable length coder/decoder 102. The zero coefficient generator 106 first reads out the coefficient (run, length) from the quantization coefficient FIFO 105. Then, the generator generates zero coefficients as many as the runs, and then generates a coefficient representing a level value. The image decoder 107 performs inverse discrete cosine transform on the non-zero coefficient and the zero coefficient sent from the zero coefficient generator 106, and carries out motion compensation based on the transform result to generate a decoded image signal.

However, a throughput of such an image data decoding apparatus is substantially constant independently of a coefficient type, that is, whether or not a target coefficient is non-zero coefficient. In contrast, the variable length coder/decoder only processes a non-zero coefficient of a quantization coefficient, and thus its throughput varies in proportion to the number of non-zero coefficients.

Here, the quantization coefficient FIFO 105 stores data as a pair (run, level). Thus, if there is no zero coefficient, for example, storing data as the pair (run, level) contrarily leads to an increase in data stored in the quantization coefficient FIFO 105. That is, there is a limitation on the quantization coefficient storable in the quantization coefficient FIFO 105, making it impossible to increase a processing speed of the variable length decoder. Further, if data decoded with the variable length coder/decoder is compressed bit stream, for example, CABAC conforming to H.264, which cannot be derived from the pair (run, level) , the data cannot be decoded using the above conventional image data decoding apparatus.

### SUMMARY OF THE INVENTION

An image data decoding apparatus according to an aspect of the invention includes: a quantization coefficient output unit for decoding compressed image data including a variable length code obtained through variable length coding to output a quantization coefficient; an examining unit for examining whether or not the quantization coefficient output from the quantization coefficient output unit includes a non-zero coefficient for each examination unit; a coefficient memory for storing, if the examination unit includes one or more non-zero coefficients, the quantization coefficient of the examination unit as a significant coefficient; a zero-coefficient generating unit for reconstructing the quantization coefficient based on an examination result from the examining unit and the significant coefficient; and an image decoding unit for generating a decoded image signal based on the quantization coefficient reconstructed with the zero-coefficient generating unit.

An image data decoding method according to another aspect of the invention includes: decoding compressed image data including a variable length code obtained through variable length coding to output a quantization coefficient; examining whether or not the quantization coefficient includes a non-zero coefficient for each examination unit; storing in a coefficient memory, if the examination unit includes one or more non-zero coefficients, the quantization coefficient of the examination unit as a significant coefficient; reconstructing the quantization coefficient based on an examination result from the examining unit and the significant coefficient stored in the coefficient memory; and generating a decoded image signal based on the output quantization coefficient.

According to the present invention, it is examined whether or nor the examination unit includes a non-zero coefficient (significant coefficient) or only includes zero coefficients for each examination unit. Then, the coefficient memory stores only significant coefficients to reconstruct the quantization coefficient based on the examination result and the significant coefficient. Thus, data stored in the coefficient memory (significant coefficient) can be equal to or smaller than the quantization coefficient decoded from the compressed image data, and the decoded quantization coefficient can be supplied to the image decoding unit beyond the capacity of the coefficient memory.

That is, according to the present invention, it is possible to provide a image data decoding apparatus and method capable of decoding more quantization coefficients from compressed image data without increasing a buffer capacity, and increasing a decoding process speed and applicable to a general-purposed structure.

### BRIEF DESCRIPTION OF THE DRAWINGS

The above and other objects, advantages and features of the present invention will be more apparent from the following description taken in conjunction with the accompanying drawings, in which:
Fig. 1 is a block diagram showing an image data decoding apparatus according to a first embodiment of the present invention;
Fig. 2 is a block diagram showing an example of a variable length coder/decoder of the image data decoding apparatus according to the first embodiment of the present invention;
Fig. 3 is a block diagram showing a non-zero coefficient detector of the image data decoding apparatus according to the first embodiment of the present invention;
Fig. 4A is a schematic diagram showing 4 x 4 blocks conforming to H.264, and Fig. 4B is a schematic diagram showing 8 x 8 blocks conforming to MPEG-2;
Fig. 5 is a schematic diagram how to zigzag-scan 16 x 16 macro-blocks and 4 x 4 blocks;
Figs. 6A and 6B show an example where the blocks of Figs. 4A and 4B are arranged in the zigzag-scanning order;
Figs. 7A and 7B show a result of examining significant coefficient flags for quantization coefficients of Figs. 6A and 6B with 8 coefficients set as an examination unit (hereinafter referred to as 8-coefficient unit);
Figs. 8A and 8B show a result of examining significant coefficient flags for quantization coefficients of Figs. 6A and 6B with 8 coefficients set as an examination unit (hereinafter referred to as 8-coefficient unit);
Fig. 9 is a flowchart showing an operation of a non-zero coefficient detector according to a second embodiment of the present invention;
Fig. 10 is a schematic diagram showing a result of generating significant coefficient flags by applying the second embodiment of the invention to CASE1 to CASE4 as shown in Figs. 6A to 8B;
Fig. 11 is a block diagram showing a non-zero coefficient detector according to a third embodiment of the present invention;
Fig. 12 is a flowchart of a significant coefficient flag generating method using a significant coefficient flag generator;
Fig. 13 is a flowchart showing details of processings in steps S16, S18, S19, S21, and S22 of Fig. 12;
Fig. 14 shows a result of generating a significant coefficient flag by applying the third embodiment of the invention to CASE5 of Figs. 6A and 6B; and
Fig. 15 is a block diagram showing a conventional image data decoding apparatus.

### DESCRIPTION OF THE PREFERRED EMBODIMENTS

The invention will be now described herein with reference to illustrative embodiments. Those skilled in the art will recognize that many alternative embodiments can be accomplished using the teachings of the present invention and that the invention is not limited to the embodiments illustrated for explanatory purposed.

### First Embodiment

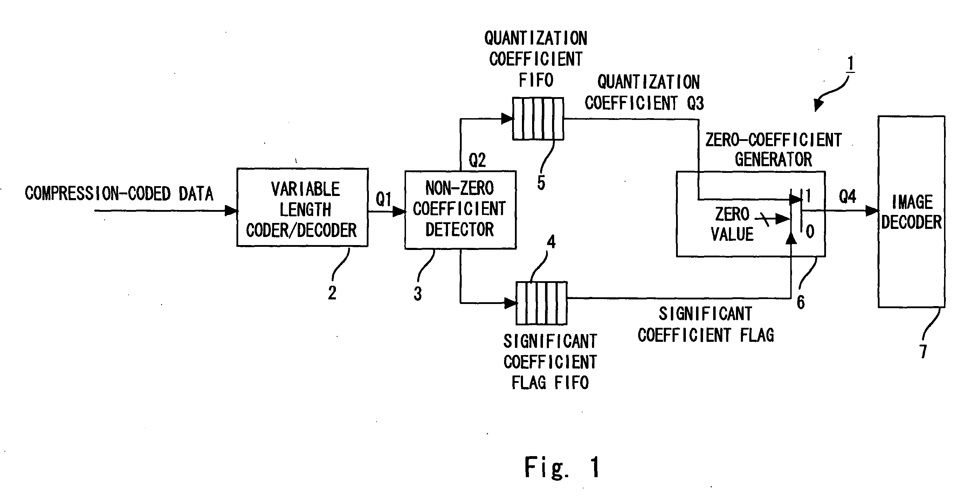

Hereinafter, embodiments of the present invention are described in detail with reference to the accompanying drawings. Fig. 1 is a block diagram showing an image data decoding apparatus according to a first embodiment of the invention. As shown in Fig. 1, the image data decoding apparatus 1 of this embodiment includes a variable length coder/decoder 2 that receives compression-coded data (compressed bit stream), and outputs a quantization coefficient Q1, and a non-zero coefficient detector 3 that determines whether the quantization coefficient Q1 is a non-zero coefficient or zero coefficient.

The compression-coded data is generated as follows if conforming to MPEG-2, for example. That is, an image signal of a moving picture to be coded is divided into blocks including plural pixels (for example, 8 x 8 pixels), and then, an image signal or a prediction error signal representing an error between an image signal and a prediction signal is subjected to discrete cosine transform (DCT) for each block. Next, a coefficient resulting from the DCT (DCT coefficient) is quantized with a predetermined quantization width, and further subjected to scan-conversion in accordance with a scan pattern such that zero coefficients of the DCT coefficient run as long as possible. Then, the scanned data undergoes variable length coding (VLC) using 0 run length.

The non-zero coefficient detector 3 examines whether the quantization coefficient Q1 output from the variable length coder/decoder 2 is a non-zero coefficient or zero coefficient on the basis of predetermined unit (hereinafter referred to as "examination unit") . If the examination unit includes one or more non-zero coefficients, the non-zero coefficient detector 3 outputs the quantization coefficients in the examination unit and also outputs a flag (hereinafter referred to as "significant coefficient flag") representing that the examination unit includes one or more non-zero coefficients. In this case, a significant coefficient flag is set to, for example, "1". Further, if all the quantization coefficients in the examination unit are zero coefficients, a significant coefficient flag representing the fact is output. In this case, the significant coefficient flag is set to, for example, "0".

In this specification, the significant coefficient refers to an examination unit including one or more non-zero coefficients. In the following description, a quantization coefficient of the examination unit output as the significant coefficient from the non-zero coefficient detector 3 is referred to as a quantization coefficient Q2.

The image data decoding apparatus 1 further includes a significant coefficient flag FIFO 4 for storing the significant coefficient flag output from the non-zero coefficient detector 3, and a quantization coefficient FIFO 5 for storing the quantization coefficient Q2. Further, the apparatus includes a zero coefficient generator 6 for reconstructing the quantization coefficient based on data output from the significant coefficient flag FIFO 4 and the quantization coefficient FIFO 5, and an image decoder 7 for decoding an image based on the quantization coefficient reconstructed with the zero coefficient generator 6. In the following description, the quantization coefficient output from the quantization coefficient FIFO 5 is denoted by Q3, and the quantization coefficient output from the zero coefficient generator 6 is denoted by Q4. In this example, the variable length coder/decoder 2 functions as a quantization coefficient output unit, the non-zero coefficient detector 3 functions as an examining unit, the significant coefficient flag FIFO 4 functions as an examination result memory, and the quantization coefficient FIFO 5 functions as a coefficient memory.

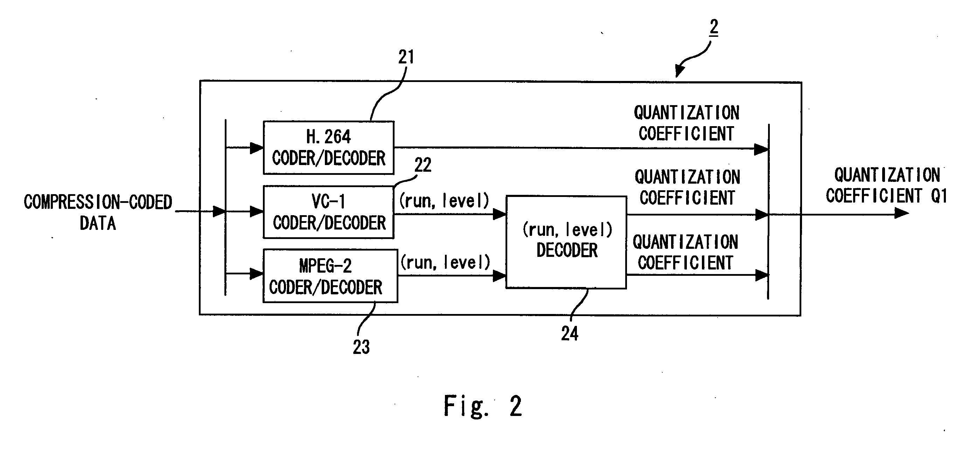

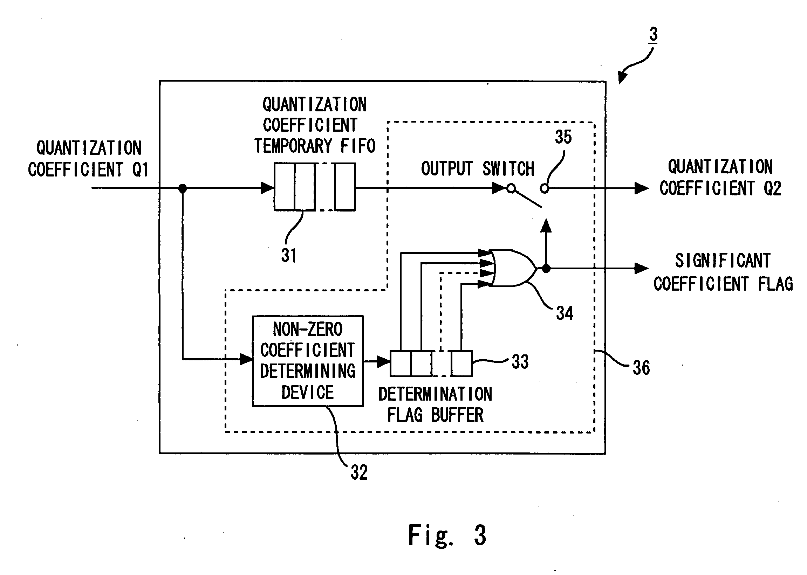

Fig. 2 is a block diagram showing an example of a variable length coder/decoder 2 of the image data decoding apparatus 1 according to this embodiment. Fig. 3 is a block diagram showing the non-zero coefficient detector 3. The variable length coder/decoder 2 derives a quantization coefficient from the compression-coded data (compressed bit stream) conforming to, for example, MPEG-2 (H.262), H.264, or VC-1. The variable length coder/decoder 2 of this embodiment outputs quantization coefficient Q1 for every format.

More specifically, as shown in Fig. 2, the variable length coder/decoder 2 includes decoders for decoding compression-coded data of various formats, for example, an H.264 coder/decoder 21 for decoding compression-coded data of the H.264format, a VC-1 coder/decoder 22 for decoding compression-coded data of the VC-1 format, and an MPEG-2 coder/decoder 23 for decoding compression-coded data of the MPEG-2 format.

The H. 264 is also called "MPEG4 AVC (advanced video coding), which is a compression-coding system that enables a data compression ratio twice or more as high as MPEG-2 and 1.5 times or more as high as MPEG-4. In addition, the VC-1 is a moving picture compressing technique developed by the Microsoft Corporation. Its data compression ratio is equivalent to that of H.264. These advanced codecs (high-compression codecs) are applied to the next-generation DVD specifications such as an HD DVD (high definition DVD), or blu-ray disk.

Here, in the VC-1 coder/decoder 22 and the MPEG-2 coder/decoder 23, a pair of the number of zero coefficients and subsequent non-zero coefficient in the compression-coded data is decoded. For example, the MPEG-2 coder/decoder 23 decodes a variable length code regarding a quantized DCT coefficient and a variable length code regarding various parameters in the compression-coded data. The variable length code regarding the quantized DCT coefficient is obtained by variable-length coding a pair of 0 run length (run) representing the run length of quantized and scan-converted zero coefficients (DCT coefficient the value of which is 0), and subsequent non-zero coefficient (DCT coefficient the value of which is not 0) (level). The MPEG-2 coder/decoder 23 outputs a decoding result each time a variable length code is decoded, and at the time of decoding a variable length code regarding the DCT coefficient, the MPEG-2 coder/decoder 23 outputs a quantized pair (run, level) as the decoding result each time a variable length code is decoded.

In contrast, in this embodiment, only the quantization coefficient Q1 is output, so in the case of using the VC-1 coder/decoder 22 or the MPEG-2 coder/decoder 23, a (run, level) decoder 24 for deriving the quantization coefficient Q1 from the pair (run, level). The variable length coder/decoder 2 sequentially inputs the obtained quantization coefficients Q1 into the non-zero coefficient detector 3.

The non-zero coefficient detector 3 of Fig. 3 includes a quantization coefficient temporary FIFO 31 for temporarily storing the supplied quantization coefficients Q1, and a non-zero coefficient determining device 32 for determining whether the quantization coefficient stored in the quantization coefficient temporary FIFO 31 is a zero coefficient or non-zero coefficient. The detector 3 further includes a determination flag buffer 33 for storing a determination result from the non-zero coefficient determining device 32, an OR circuit 34 for implementing the logical OR operation of output values of the determination flag buffer 33, and an output switch 35 that is turned on/off based on the output value of the OR circuit 34. The non-zero coefficient determining device 32, the determination flag buffer 33, the OR circuit 34, and the output switch 35 constitute an examination result generating unit 36. The examination result generating unit 36 outputs a significant coefficient flag showing whether the examination unit is a significant coefficient or not as an examination result. Further, if it is determined that the examination unit is a significant coefficient, the quantization coefficient (significant coefficient) stored in the quantization coefficient temporary FIFO 31 is output. The quantization coefficient temporary FIFO 31 functions as a coefficient memory.

The quantization coefficient Q1 supplied to the non-zero coefficient detector 3 is sent to the quantization coefficient temporary FIFO 31 and the non-zero coefficient determining device 32. The quantization coefficient temporary FIFO 31 is an FIFO that stores quantization coefficients in a predetermined unit (a given number of quantization coefficients), that is, quantization coefficients in an examination unit. The examination unit may include, for example, two, four, or eight quantization coefficients (hereinafter, a coefficient sequence including n quantization coefficients (n is a natural number) is also referred to as "n-coefficient unit").

The non-zero coefficient determining device 32 determines whether or not the quantization coefficient input also to the quantization coefficient temporary FIFO 31 is a non-zero coefficient. Then, if the quantization coefficient is a non-zero one, a determination flag is set to "1" and output; otherwise, the determination flag is set to "0" and output. The determination flag buffer 33 sequentially stores determination flags output from the non-zero coefficient determining device 32. After the completion of the sequential storage of the flags corresponding to the examination unit, the buffer sends these flags to the OR circuit 34.

The OR circuit 34 receives all the determination flags corresponding to the examination unit to implement the logical OR operation of these values to output the resultant as the significant coefficient flag. That is, the significant coefficient flag represents whether or not the examination unit includes a non-zero coefficient for each examination unit. The significant coefficient flag is also used as a control signal for on/off control of the output switch 35. The output switch 35 is turned on if the significant coefficient flag is "1", that is, at least one quantization coefficient in the examination unit is a non-zero coefficient. On the other hand, only when all quantization coefficients in the examination unit are zero-coefficients, the significant coefficient flag is set to "0".

If the examination unit includes a non-zero coefficient, and thus the output switch 35 is turned on, the quantization coefficient (significant coefficient) Q2 from the quantization coefficient temporary FIFO 31 is sent. On the other hand, if the examination unit includes only zero coefficients, the output switch 35 is turned off, and no quantization coefficient is sent. That is, only the significant coefficient is output from the quantization coefficient temporary FIFO 31 through the output switch 35.

The quantization coefficient temporary FIFO 31 can store coefficients corresponding to the examination unit, and the determination flag buffer 33 can store determination flags corresponding to the examination unit. In the description of this embodiment, the examination unit has a preset, fixed size like a two-coefficient unit, a four-coefficient unit, or an eight-coefficient unit, for example. However, the examination unit size may be dynamically changed in accordance with the compression-coded data. In this case, the quantization coefficient temporary FIFO 31 and the determination flag buffer 33 may be structured to deal with the largest examination unit.

Referring back to Fig. 1, the significant coefficient flag FIFO 4 sequentially stores the significant coefficient flags set in the non-zero coefficient detector 3. The quantization coefficient FIFO 5 stores the quantization coefficient Q2 output from the non-zero coefficient detector 3, that is, the significant coefficient.

The zero coefficient generator 6 receives the significant coefficient flag from the significant coefficient flag FIFO 4, and reads the quantization coefficient Q3 stored as the significant coefficient from the quantization coefficient FIFO 5 to generate the quantization coefficient Q4. More specifically, the significant coefficient flag is first received by the zero coefficient generator 6. If the received significant coefficient flag is "0", 0 is generated in a number corresponding to the examination unit. On the other hand, if the significant coefficient flag is "1", the quantization coefficient Q3 stored as the significant coefficient is read from the quantization coefficient FIFO 5 and output. In this way, based on the significant coefficient stored in the quantization coefficient FIFO 5 and the significant coefficient flag stored in significant coefficient flag FIFO 4, the quantization coefficient Q1 output from the variable length coder/decoder 2 can be reconstructed to send the quantization coefficient Q4. Incidentally, the quantization coefficient Q2 as the significant coefficient is input into the quantization coefficient FIFO 5 and directly output, so the output quantization coefficient Q3 is the same as the quantization coefficient Q2 output from the non-zero coefficient detector 3. In addition, the zero coefficient generator 6 reconstructs the quantization coefficient Q1 (=Q4) output from the variable length coder/decoder 2 through the above processing.

As mentioned above, the quantization coefficient FIFO 5 stores only the significant coefficient of the quantization coefficient Q1, and if the examination unit includes only the zero coefficients, the quantization coefficient FIFO 5 does not store the quantization coefficient Q1. Hence, a data amount of the quantization coefficient Q2 stored in the quantization coefficient FIFO 5 is smaller than that of the quantization coefficient Q1 output from the variable length coder/decoder 2. This is reconstructed in the zero coefficient generator 6 into a quantization coefficient equivalent to the quantization coefficient Q1 output from the variable length coder/decoder 2, making it possible to buffer the quantization coefficient Q1 decoded with the variable length coder/decoder 2 in a data amount smaller than an actual data amount and send the coefficient to the subsequent image decoder 7. That is, the image data decoding apparatus 1 determines whether or not the quantization coefficient is a significant coefficient for each examination unit, and stores only significant coefficients. Hence, it is possible to compress the quantization coefficient Q1 and store the compressed coefficient in the quantization coefficient FIFO 5 without increasing a capacity of the quantization FIFO. This means that the quantization coefficient FIFO 5 can store more quantization coefficients as compared with the subsequent image decoder 7 to advance the variable length coding/decoding processing. Thus, a throughput of the variable length coding/decoding processing can be averaged, and an apparent processing speed increases.

Next, an operation of the image data decoding apparatus according to this embodiment is described in detail. According to the moving picture compression standards such as MPEG-2 and H.264, moving pictures are compressed in units of rectangle called a block. The image divided into blocks is inverted and quantized to obtain an image that is compressed with a high compression ratio and less deteriorated.

For example, according to the MPEG-2 standards, prior to the quantization, discrete cosine transform (DCT) is carried out to convert video information resulting from the motion prediction and intra-frame prediction into a frequency domain. An image is divided into small rectangular blocks by the DCT processing, and allocates efficient codes to each block to compress the image. The MPEG-2 standard defines 8 x 8 pixels as one block.

Further, while DCT is carried out on the block of 8 x 8 pixels in the MPEG-2 standard, a block of 4 x 4 pixels is orthogonal transformed (so-called integer-precision DCT) in the H.264 standard. This is a technique of performing floating-point calculation based on the integer arithmetic, and a block size becomes smaller (down to 4 x 4 pixels), so block noise of the decoded image can be made inconspicuous. In addition, in the H.264 standard, the intra-frame prediction is introduced, or arithmetic coding called CABAC (context adaptive binary-arithmetic coding) is introduced to attain high compression efficiency.

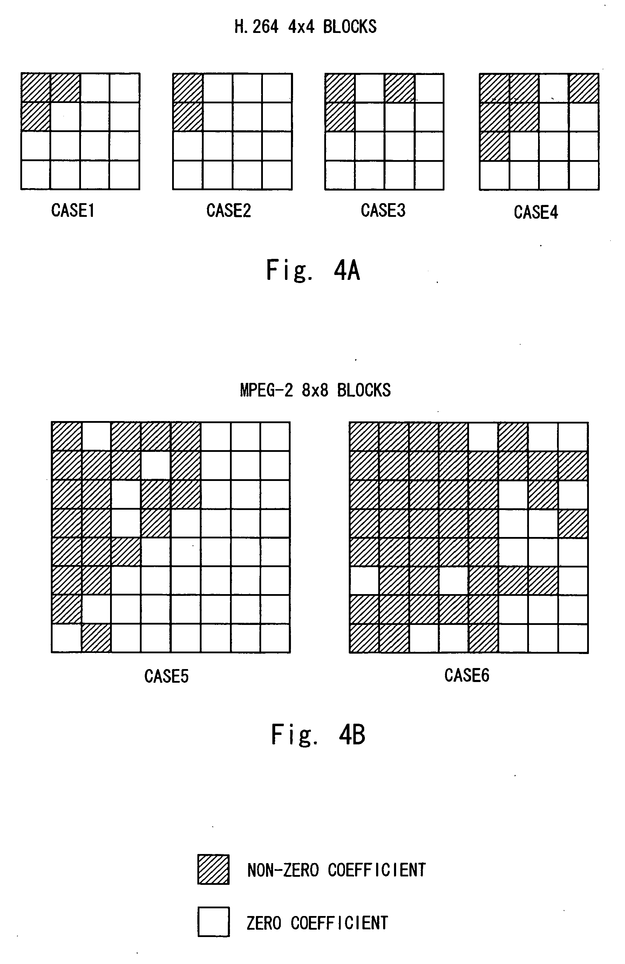

Fig. 4A is a schematic diagram showing 4 x 4 blocks in the H.264 standard, and Fig. 4B is a schematic diagram showing 8 x 8 blocks in the MPEG-2 standard. In Figs. 4A and 4B, quantization coefficients of shaded pixels are non-zero coefficients, and quantization coefficients of the other pixels are zero coefficients. As shown in Figs. 4A and 4B, the non-zero coefficients tend to concentrate on the upper left portion of the block.

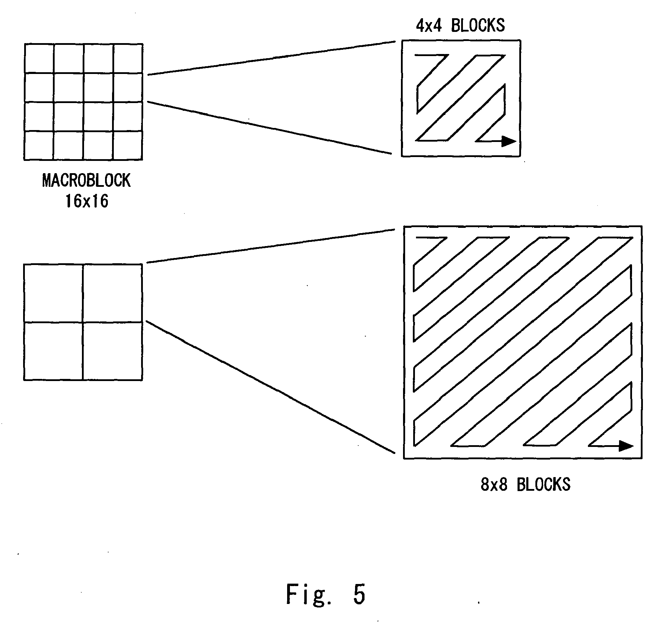

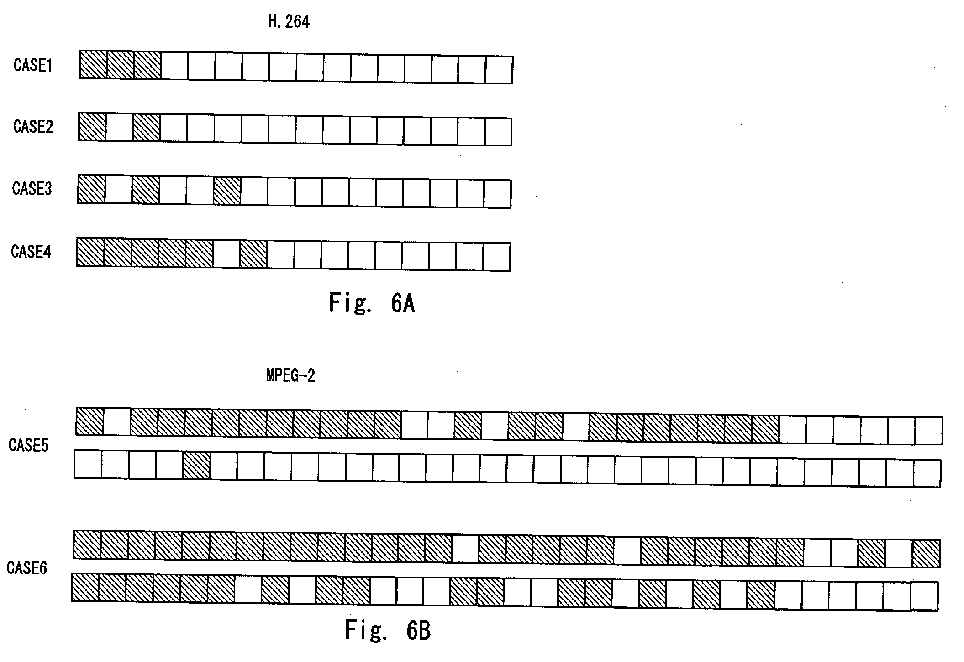

Fig. 5 illustrates how blocks are zigzag-scanned in units of 4 x 4 blocks and 8 x 8 blocks to convert the DCT coefficient of a macroblock including 16 x 16 blocks into one-dimensional vector. The quantization coefficients in the compression-code string are stored in the zigzag scanning order as shown in Fig. 5. Figs. 6A and 6B show an example where blocks of Figs. 4A and 4B are arranged in the zigzag-scanning order. The quantization coefficients as the zero coefficient or non-zero coefficient are arranged one-dimensionally and output from the variable length coder/decoder 2.

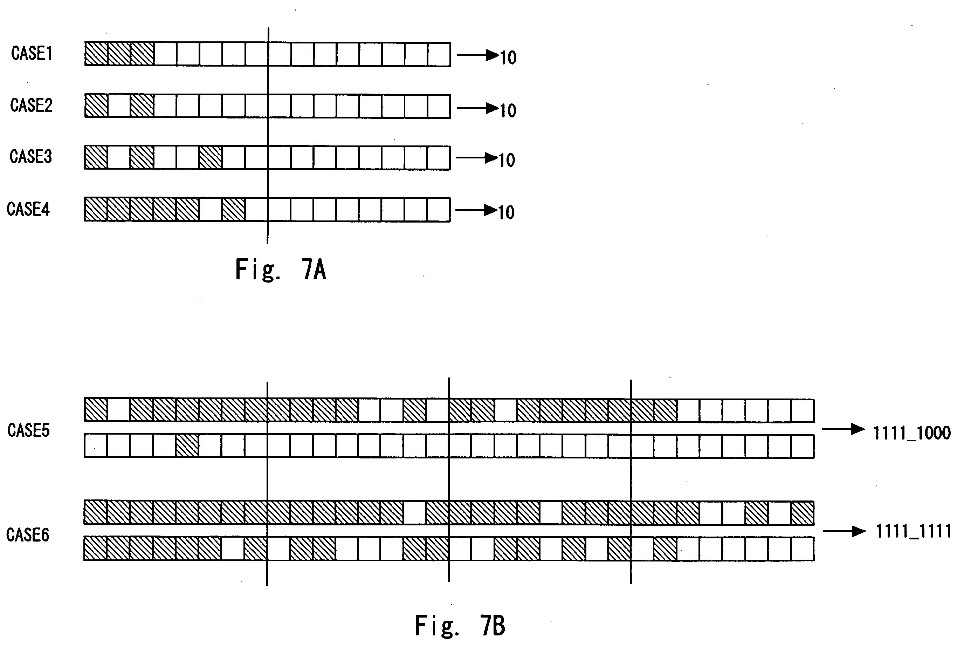

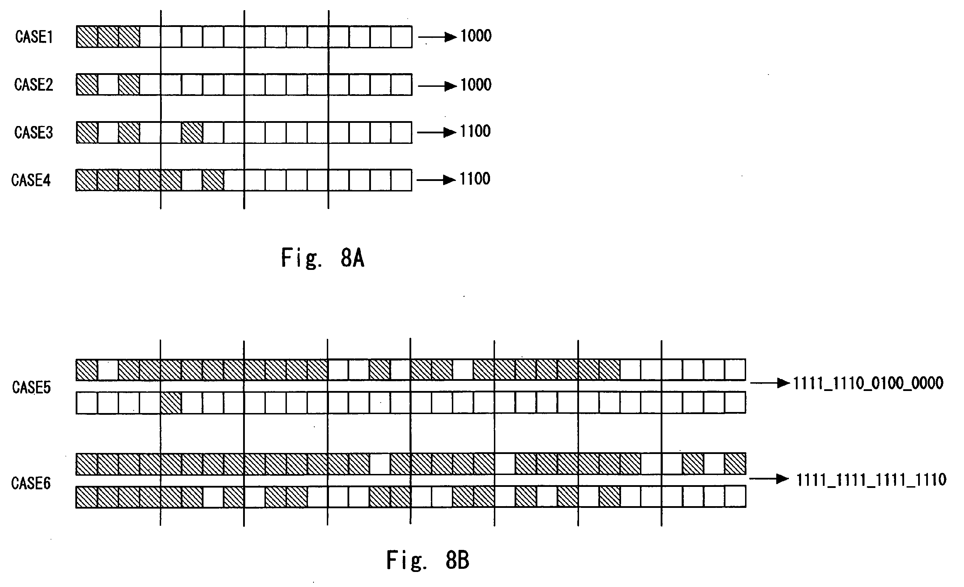

The non-zero coefficient detector 3 receives the quantization coefficient sequence and determines whether or not the coefficient is a significant coefficient for each examination unit. Figs. 7A and 7B show a result of examining the significant coefficient flags for quantization coefficients of Figs. 6A and 6B with the 8 coefficients set as the examination unit (hereinafter referred to as "8-coefficient unit"). Further, Figs. 8A and 8B show a result of examining the significant coefficient flags for quantization coefficients of Figs. 6A and 6B with the 4 coefficients set as the examination unit (hereinafter referred to as "4-coefficient unit"). If the examination unit is a significant coefficient, the significant coefficient flag is "1". The output switch 35 is turned on. The quantization coefficient (significant coefficient) Q2 is output from the quantization coefficient temporary FIFO 31, and the significant coefficient flag "1" is sent from the OR circuit 34. On the other hand, if the examination unit only includes zero coefficients, the significant coefficient flag "0" is output from the OR circuit 34, and at the same time, the output switch 35 is turned off thereby. As a result, no quantization coefficient is output.

In any of CASE1 to CASE4 of Fig. 7A, the first examination unit (8-coefficient unit) includes plural non-zero coefficients, so the significant coefficient flag "1" is output, and the 8-coefficient unit is output as the significant coefficient (quantization coefficient Q2) from the quantization coefficient temporary FIFO 31 through the output switch 35. The next examination unit includes only zero coefficients, so the significant coefficient flag "0" is only output, and no quantization coefficient is output. In the case of Fig. 7B as well, if the examination unit includes only zero coefficients, no quantization coefficient is output. In the case of Fig. 8A, the 4-coefficient unit is used unlike the example of Fig. 7A. The first examination units of CASE1 and CASE2 include non-zero coefficients, so the significant coefficient flag "1" is sent to the significant coefficient flag FIFO 4, and the quantization coefficient Q2 as the significant coefficient is sent to the quantization coefficient FIFO 5. In CASE3 and CASE4, in the first two examination units, the significant coefficient flag "1" is sent to the significant coefficient flag FIFO 4, and the quantization coefficient Q2 is sent to the quantization coefficient FIFO 5 as the significant coefficient.

The zero coefficient generator 6 reconstructs the quantization coefficient sequence (Q1) output from the variable length coder/decoder 2 based on the thus-output significant coefficient flag and significant coefficient. In-CASE1 of Fig. 8A, for example, the significant coefficient flag FIFO 4 stores (1000). Incidentally, the value in the bracket represents the order of inputting the significant coefficient flags to the FIFO. The zero coefficient generator 6 first receives the significant coefficient flag "1", and the quantization coefficient (Q3) is read from the quantization coefficient FIFO 5 and output. Then, when the next significant coefficient flag "0" is input, 0 is output in a number corresponding to the examination unit (=4-coefficient unit). Since the subsequent flags, that is, the third and fourth significant coefficient flags are "0", each time the significant coefficient flag "0" is input, 0 is output in a number corresponding to the 4-coefficient unit. In this way, the zero coefficient generator 6 reconstructs the quantization coefficient corresponding to 16 pixels similar to CASE1 of Fig. 6A, that is, the quantization coefficient Q1 (=Q4) equal to the output of the variable length coder/decoder 2. Meanwhile, regarding a memory capacity necessary for storing the quantization coefficient of 16 pixels, in this embodiment, the memory needs only to store the four significant coefficient flags and the quantization coefficients corresponding to the 4-coefficient unit.

Next, beneficial effects of this embodiment are described. Table 1 shows a result of comparing the number of words of the quantization coefficient to be stored in concrete examples, CASE1 to CASE6, of this embodiment as shown in Figs. 6A to 8B with the number of words of the quantization coefficient to be stored in the related art. The related art stores the data as a pair (run, level), and one word is stored for each of the pair (run, level) . That is, if the quantization coefficient is a non-zero coefficient, two words are necessary.

**Table 1**

| | Original data | 8-coefficient unit | 4-coefficient unit | Related Art |
|---|---|---|---|---|
| CASE 1 (4x4) | 16 word | 8 word+2 bit | 4 word+4 bit | 6 word |
| CASE 2 (4x4) | 16 word | 8 word+2 bit | 4 word+4 bit | 4 word |
| CASE 3 (4x4) | 16 word | 8 word+2 bit | 8 word+4 bit | 6 word |
| CASE 4 (4x4) | 16 word | 8 word+2 bit | 8 word+4 bit | 12 word |
| CASE 5 (8x8) | 64 word | 40 word+8 bit | 32 word+16 bit | 44 word |
| CASE 6 (8x8) | 64 word | 64 word+8 bit | 60 word+16 bit | 86 word |

For example, in CASE4, if the quantization coefficient corresponding to one pixel is equivalent to one word, the original data corresponds to 16 pixels and thus is equivalent to 16 words. Six coefficients out of the quantization coefficients in 16 words are non-zero coefficients in CASE4. Accordingly, in the case of storing the coefficients as the pair (run, level) based on the related art, a memory capacity equivalent to 6x2=12 words is necessary.

In contrast, in this embodiment, if the examination unit is an 8-coefficient unit as shown in Figs. 7A and 7B, 16 pixels correspond to two examination units, and the significant coefficient flag is set to "10". Accordingly, the quantization coefficient of the first examination unit (8-coefficient unit = 8 words) only is stored in the quantization coefficient FIFO 5, and the significant coefficient flags corresponding to each examination unit total 2 bits. That is, although a memory capacity equivalent to 12 words is necessary in the related art, this embodiment requires a memory capacity equivalent to 8 words + 2 bits. Further, as shown in Figs. 8A and 8B, if the examination unit is the 4-coefficient unit, 16 pixels correspond to four examination units, and its significant coefficient flag is "1100". Accordingly, the quantization coefficients equivalent to 2x2 examination units (= 8 words) are stored in the quantization coefficient FIFO 5, and the significant coefficient flags corresponding to each examination unit total 4 bits.

Incidentally, in some cases, a memory capacity cannot be smaller than the related art. However, it is possible to reduce the total capacity of the stored quantization coefficients by appropriately setting the examination unit size in accordance with the data type and size.

In the H.264 and VC-1 standards, a compression rate is considerably improved through advanced motion prediction. Hence, a fluctuation range of the variable length coding/decoding processing is wider than that of the MPEG-2 standard. That is, in a high-definition and random-pattern image the motion of which cannot be predicted, for example, a larger number of non-zero coefficients are included to drastically lower the compression ratio. According as the number of non-zero coefficients increases, and the variable length coding/decoding processing itself is advanced, a variation in throughput of the variable length coding/decoding processing is much larger than that of the MPEG-2 standard. However, designing the variable length coder/decoder in accordance with a peak throughput leads to difficult design and much higher cost. For example, if a buffer capacity is increased in consideration of the worst case, the processing gives more precedence to the process to obtain the average throughput, but the larger buffer capacity leads to higher cost.

In contrast, according to this embodiment, the variable length coder/decoder stores only the significant coefficient out of the quantization coefficients, that is, coefficients when the examination unit includes the non-zero coefficient, into the buffer (quantization coefficient FIFO 5) for storing the quantization coefficients for earlier processing with respect to the subsequent image decoder. Hence, the memory capacity can be reduced. In other words, the quantization coefficients can be buffered beyond the capacity of the quantization coefficient FIFO 5, and the throughput of the variable length coder/decoder is averaged to improve an average effective speed.

### Second Embodiment

Next, a second embodiment of the present invention is described. In the description of the above first embodiment, the examination unit is a fixed unit but may be variable. A second embodiment of the invention aims at setting the examination unit variable to further reduce a capacity of a memory for storing the quantization coefficients or improve a buffering efficiency of the quantization coefficients.

A feature of a general image is that most of the components concentrate around the upper left portion of the block in inverted data. In the compressed image, an occurrence rate of the non-zero coefficients becomes lower from the upper left portion of the block towards the lower right portion based on the above feature. Based on this feature, the examination unit on the upper left side is set to 1, and a value may be increased toward the lower right portion to nonuniformly set values of the examination units in the block.

This embodiment describes an example where the block includes 16 pixels. In this embodiment, one block (16 coefficients) is set as the examination unit based on a preset table (hereinafter, referred to as unbalanced coefficient unit table) and then processed. Table 2 below is an unbalanced coefficient unit table. The unbalanced coefficient unit table shows table indexes TI associated with examination units of different predetermined coefficient units (hereinafter, unbalanced examination unit window (W)). In the unbalanced coefficient unit table, the size of the subsequent examination units in the quantization coefficient sequence of one block are set equal to or larger than that of the previous examination units. Hence, the examination units are set in accordance with the occurrence rate of zero coefficients to effectively reduce the significant coefficients.

**Table 2**

| Index (TI) | Unbalanced examination unit (W) |
|---|---|
| 0 | 1 |
| 1 | 1 |
| 2 | 2 |
| 3 | 2 |
| 4 | 4 |
| 5 | 6 |

An image data compressing apparatus may be structured in substantially the same way as the first embodiment. The non-zero coefficient detector 3 and the zero coefficient generator 6 can reference the unbalanced coefficient unit table of Table 2. The non-zero coefficient detector 3 and the zero coefficient generator 6 may independently have the unbalanced coefficient unit table, or both of them may reference a common unbalanced coefficient unit table. Further, in this embodiment, the unbalanced examination units are 1 to 6-coefficient units. In this case, the non-zero coefficient detector 43 effects the non-zero coefficient determination on at least the examination unit as the 6-coefficient unit to generate the significant coefficient flag.

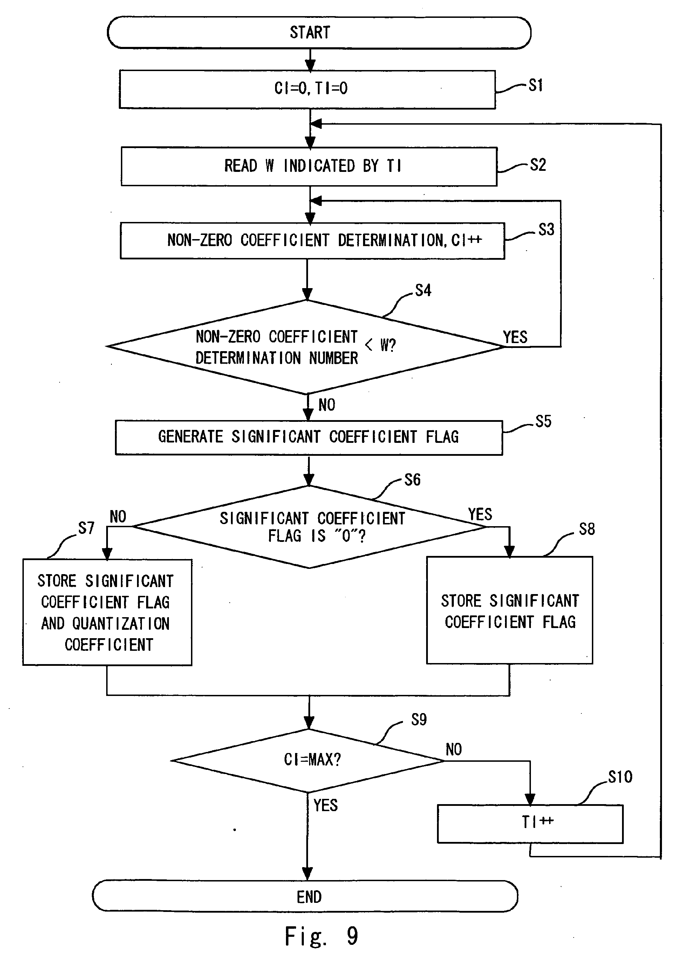

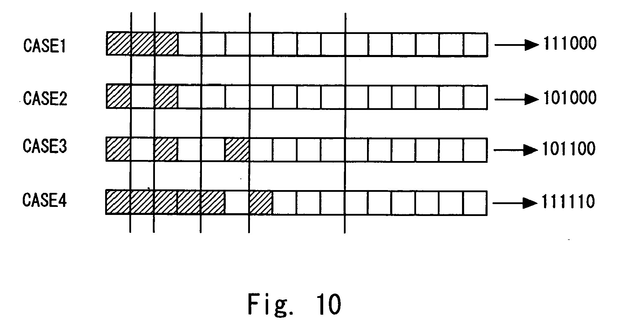

Fig. 9 is a flowchart of an operation of a non-zero coefficient detector according to the second embodiment. Fig. 10 is a schematic diagram showing a result of generating significant coefficient flags by applying this embodiment to CASE1 to CASE4 of Figs. 6A to 8B. A coefficient index CI is assigned from the top of the quantization coefficient in each block. For example, in each of CASE1 to CASE4 of Fig. 10, coefficient indexes CI (= 0 to 15) are assigned from the left to the right.

As shown in Fig. 9, the coefficient index CI (= 0) and the table index TI (= 0) are first read (step S1). Next, the unbalanced examination unit W indicated by the table index TI is read (step S2). In this example, the unbalanced examination unit W (= 1) corresponding to the table index TI (= 0) is read. When the examination unit is set, the non-zero coefficient detector 3 executes the same processing as that of the first embodiment on the examination unit. That is, the non-zero coefficient determining device 32 determines whether or not the quantization coefficient is a non-zero coefficient, and the coefficient index CI is incremented (step S3). Then, a processing subsequent to step S3 is repeated until the number of non-zero coefficient determinations reaches or exceeds the unbalanced examination unit W (step S4). In this example, since the unbalanced examination unit W = 1, it is determined whether or not the quantization coefficient with the coefficient index CI = 0 is a non-zero coefficient, and then the process advances to step 55.

Incidentally, in the description of this embodiment, determination as to whether or not the coefficient is a non-zero coefficient is performed for all the quantization coefficients in the unbalanced examination unit in steps S3 and S4. The significant coefficient flag is set to "1" if at least one of the quantization coefficients in the unbalanced examination unit is a non-zero coefficient. Accordingly, after the non-zero coefficient determination of the unbalanced examination unit (step S3), it is determine whether or not the coefficient is a non-zero coefficient. If the coefficient is not a non-zero coefficient, needless to say, the processings of steps S3 and S4 are stopped, and the process advances to step S5; a processing subsequent to step S3 may be repeated only when the coefficient is a zero coefficient.

After the completion of the non-zero coefficient determination for coefficients corresponding to the unbalanced examination unit W, a determination flag stored in the determination flag buffer 33 is sent to the OR circuit 34 to execute the logical OR operation of all the determination flags (step S5). If the resultant flag (=significant coefficient flag) is "1" (step S6: NO), the significant coefficient flag "1" is output, and at the same time, the quantization coefficient stored in the quantization coefficient temporary FIFO 31 is sent through the output switch 35 (step S7) . On the other hand, if the resultant flag value (=significant coefficient flag) is "0" (step S6: YES), only the significant coefficient flag is output (step S8).

In CASE1, if the unbalanced examination unit is 1, and the coefficient index is 0, the significant coefficient flag is "1", and the significant coefficient flag "1" and the quantization coefficient are output. The above processing is repeated from step S1 until the coefficient index CI = max (max represents the maximum coefficient index in the block; in this embodiment, max= 15). In this case, the table index TI is incremented before the shift to step S1 (step S10), and the next unbalanced examination unit W is read (step S2) to repeat the non-zero coefficient determination.

For example, in this embodiment, since the next unbalanced examination unit W is 1, under the condition that the unbalanced examination unit W= 1, and the coefficient index CI= 1, it is determine whether or not the quantization coefficient with the coefficient index CI= 1 is a significant coefficient, that is, whether or not the coefficient is a non-zero coefficient, in this case (steps S2 to S4). After that, the process advances to step S5. Further, in the following repetitive processing, since the unbalanced examination unit W=2, and the coefficient index CI=2, it is determine whether or not each quantization coefficient is a non-zero coefficient for the 2-coefficient unit with the coefficient index CI=2 and the coefficient index CI=3 to generate a significant coefficient flag (step S5). Then, a processing subsequent to step S6 is effected.

Fig. 10 shows the significant coefficient flags thus set for each of CASE1-CASE4. By using the 1, 1, 2, 2, 4, and 6-coefficient units as unbalanced examination units set in the unbalanced examination unit table of Table 2, the examination unit is made variable. In this embodiment, when the significant coefficient flag is generated, as the value of the lower right portion of the block, that is, the coefficient index CI becomes large, the examination unit of the larger coefficient unit is set. So that, if the zero coefficient is increased in proportion to the coefficient index CI, it is possible to considerably effectively reduce the number of stored quantization coefficients (word), and also reduce the number of significant coefficient flags. Table 3 below shows a result of comparing the related art with this embodiment.

**Table 3**

| | Original data | Second Embodiment | Related Art |
|---|---|---|---|
| CASE 1 (4x4) | 16 word | 4 word+6 bit | 6 word |
| CASE 2 (4x4) | 16 word | 3 word+6 bit | 4 word |
| CASE 3 (4x4) | 16 word | 5 word+6 bit | 6 word |
| CASE 4 (4x4) | 16 word | 10 word+6 bit | 12 word |

In this embodiment, a preset unbalanced examination unit can be referenced to switch the examination units. Accordingly, it is possible to extremely efficiently reduce the number of quantization coefficients stored in the quantization coefficient FIFO 5 depending on a target image, only in such a way to enable detection of non-zero coefficients in the largest examination unit. That is, consecutive zero coefficients are collectively set to the examination unit, whereby if the quantization coefficient is the zero coefficient, this coefficient is not held. Hence, the larger run length of zero coefficients of the quantization coefficient allows more efficient compression to reduce the capacity for storing the quantization coefficients.

As mentioned above, in general, the non-quantization coefficient in a pixel near the upper left portion of the block is more likely to be a non-zero coefficient. As the distance of a target pixel from the upper left corner increases, that is, the distance to the lower right corner is reduced, it is more likely that the quantization coefficient is a zero coefficient. Accordingly, a pixel near the upper left corner is more likely to be a non-zero coefficient, so a small examination unit is set. In a pixel near the lower right corner which is more likely to be a zero coefficient, a large examination unit is set. Thus, it is possible to compress the quantization coefficient not only in the pixels near the block lower right corner with a high occurrence rate of zero coefficients but also in the pixels near the block upper left corner with a low occurrence rate of zero coefficients.

In this way, a variable coefficient unit is previously set for the quantization coefficient sequence including a predetermined number of quantization coefficients, for example, 16 quantization coefficient sequences if one block has 16 pixels, in consideration of a statistical occurrence rate of the run length of zero coefficients. Based on the above processing, the compression can be performed even if the occurrence rate of the zero coefficients is low. Hence, the compression ratio of the zero coefficients can be further improved as compared with the case of uniformly setting a fixed length for the examination unit. In addition, the number of quantization coefficients actually supplied to the image decoder 7 can be made larger than the number of quantization coefficients storable in the quantization coefficient FIFO 5, so an image decoding speed can be increased. Third Embodiment

Next, an image data decoding apparatus according to a third embodiment of the present invention is described. In this embodiment, similar to the second embodiment, the examination unit is variably set. However, instead of setting the examination unit with reference to a table irrespective of input image data, the examination units are adaptively switched in accordance with the image data depending on the number of non-zero coefficients.

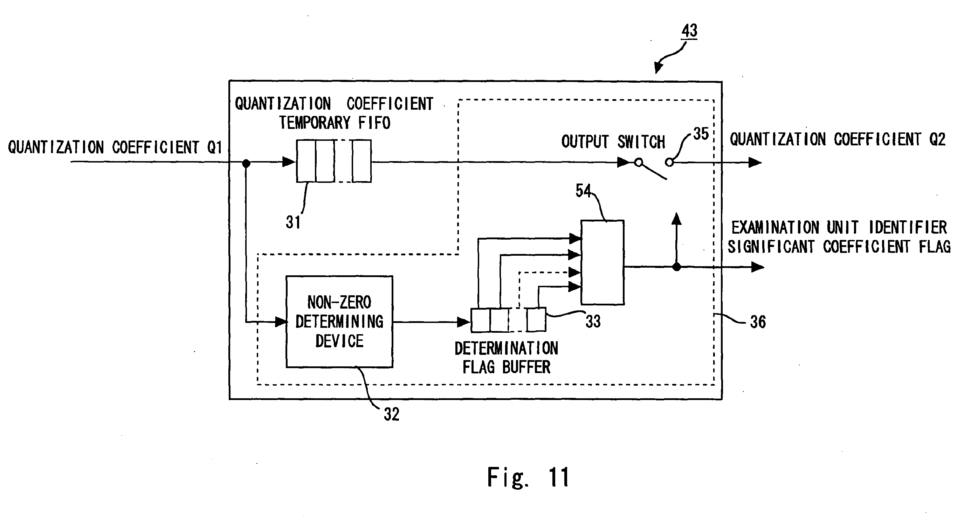

Fig. 11 is a block diagram showing a non-zero coefficient detector 43 of the image data decoding apparatus according to this embodiment. Incidentally, the same components as those of the non-zero coefficient detector 3 of Fig. 3 are denoted by like reference numerals. A detailed description thereof is omitted. Further, the other components of the image data decoding apparatus may be structured similarly to the image data decoding apparatus according to the first embodiment of Fig. 1.

As shown in Fig. 11, the non-zero coefficient detector 43 of this embodiment includes a significant coefficient flag generator 54 instead of using the OR circuit 34 for performing the logical OR operation of the determination flags from the determination flag buffer 33. The significant coefficient flag generator 54 determines which examination unit involves the fewest quantization coefficients to be output. A significant coefficient flag is generated.

Here, three units of the 2-coefficient unit, the 4-coefficient unit, and the 8-coefficient unit are prepared as the examination unit beforehand by way of example, and these examination units are adaptively switched. Incidentally, needless to say, the number of examination units prepared and adaptively switched may be two or four or more. The quantization coefficient temporary FIFO 31 can temporarily store the 8-coefficient unit as the largest examination unit. The non-zero coefficient determining device 32 determines whether or not each quantization coefficient in the 8-coefficient unit as the largest examination unit is a non-zero coefficient. The determination flag buffer 33 can store all the determination flags corresponding to the 8-coefficient unit as the largest unit, and output the stored determination flags to the significant coefficient flag generator 54.

The significant coefficient flag generator 54 includes the 2-coefficient unit, the 4-coefficient unit, and the 8-coefficierit unit as the examination units to be adaptively switched (hereinafter referred to as arbitrary examination unit W 2). Incidentally, the arbitrary examination unit W2 may be held as a table that associates the table index TI with the arbitrary examination unit W2 as in the second embodiment, for example. Then, the significant coefficient flag is generated for all of the 2-coefficient unit, the 4-coefficient unit, and the 8-coefficient unit as the arbitrary examination unit W2. Hereinafter, this significant coefficient flag is referred to as a temporary significant coefficient flag.

Here, the significant coefficient flag generator 54 executes a processing of determining the coefficient units set as the examination unit so as to reduce the number of significant coefficients where the examination unit includes non-zero coefficients based on the result of examining each coefficient unit, that is, the temporary significant coefficient flag. For example, if the temporary significant coefficient flag is generated for large and small coefficient units, when every temporary significant coefficient flag is "1", the larger coefficient unit is set as the examination unit. Further, if the temporary significant coefficient flag of the larger coefficient unit is "1", and the temporary significant coefficient flag of the smaller coefficient unit is "0", the smaller coefficient unit may be set as the examination unit.

More specifically, in this embodiment, the 8-coefficient unit, the 4-coefficient unit, and the 2-coefficient unit are combined such that the temporary significant coefficient flag becomes "0", and the coefficient unit becomes large. For example, if the temporary significant coefficient flag of the 2-coefficient unit is "1" "0" "0" and "1" the examination unit may be set to the 2-coefficient unit, the 4-coefficient unit, and the 2-coefficient unit. After the coefficient unit to be set as the examination unit is determined, if the significant coefficient flag of the determined coefficient unit is "1", the quantization coefficient is output from the quantization coefficient temporary FIFO 31 through the output switch 35. In addition, if the significant coefficient flag is "0", the output switch 35 is turned off. These operations are the same as those of the first and second embodiments.

Further, in this embodiment, the subsequent zero coefficient generator 6 should determine the number of coefficient units as the examination unit of the received significant coefficient flag. Hence, the significant coefficient flag generator 54 generates the significant coefficient flag and an identifier representing the examination unit size (examination unit identifier), and outputs the identifier together with the significant coefficient flag. In this embodiment, since the 2, 4, and 8-coefficient units are used, the examination unit identifier is, for example, 2 bits. In the case of the 8-coefficient unit, "00" (=0) may be set. In the case of the 4-coefficient unit, "01" (=1) may be set. In the case of the 2-coefficient unit, "11" (=2) may be set.

The significant coefficient flag FIFO 4 receives the significant coefficient flag together with the examination unit identifier and outputs the received ones to the zero coefficient generator 6. The zero coefficient generator 6 receives the significant coefficient flag and the examination unit identifier. If the significant coefficient flag is "0", for example, in the case of using the above coefficient unit, when the examination unit identifier is "0", 8 zero coefficients are generated. Further, if the significant coefficient flag is "1", and the examination unit identifier is "1", four quantization coefficients are read from the quantization coefficient FIFO.

Hence, for example, in the case of using the 8-coefficient unit or the 4-coefficient unit, even if the significant coefficient flag is "1", as long as the significant coefficient flag of the 2-coefficient unit smaller than the 8- or 4-coefficient unit is "0", the coefficient can be switched to the 2-coefficient unit, and the examination units can be adaptively switched in accordance with the image data.

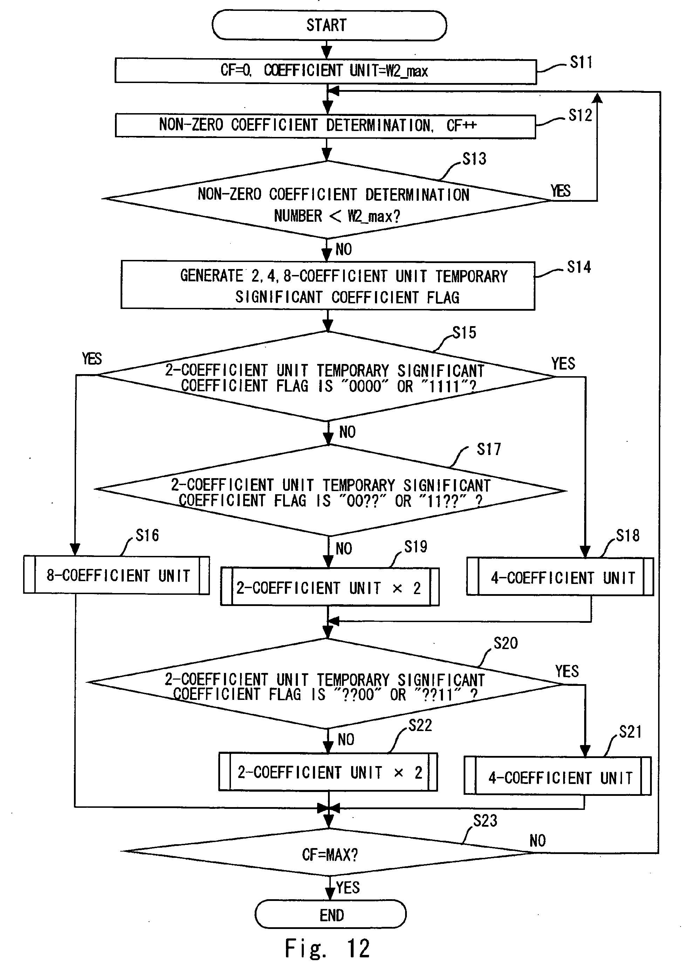

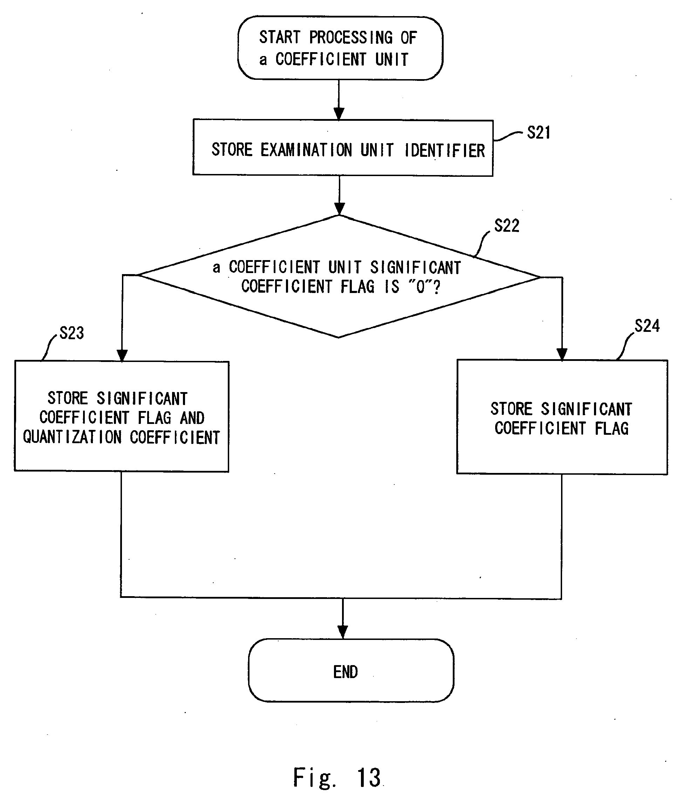

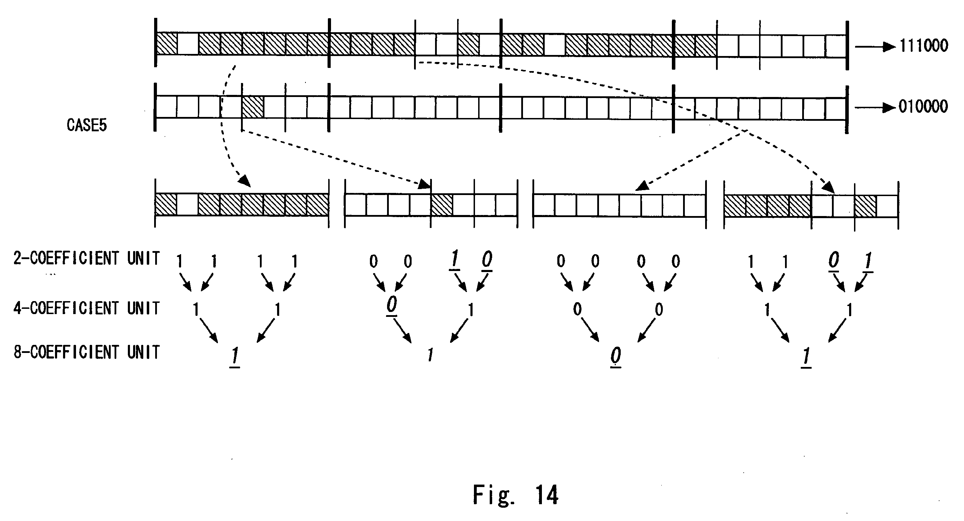

Next, a significant coefficient flag generating method of this embodiment is descried. Fig. 12 is a flowchart of the significant coefficient flag generating method using the significant coefficient flag generator 54, that is, an examination unit determining method. Further, Fig. 13 is a flowchart of detailed operations of steps S16, 18, 19, 21, and 22 of Fig. 12. Further, Fig. 14 shows a result of generating a significant coefficient flag by applying this embodiment to CASE5 of Fig. 6B.

As shown in Fig. 12, similar to the second embodiment, the coefficient index CI = 0, and the maximum examination unit W2_max of the arbitrary examination unit W2 are first read (step S11), and the non-zero coefficient determination is carried out based on the coefficient index CI = 0 (step S12). Then, the coefficient index CI is incremented to repeat the non-zero coefficient determination until the maximum examination unit W2_max is reached (step S12). In this embodiment, the maximum examination unit W2 max=8.

After the completion of the non-zero coefficient determination of the 8 quantization coefficients, the significant coefficient flag generator 54 generates the significant coefficient flag (hereinafter referred to as temporary significant coefficient flag) for each of 2, 4, and 8-coefficient units (step S14). Fig. 14 shows a result of determining the temporary significant coefficient flags for a first 8-coefficient unit, a second 8-coefficient unit, a fifth 8-coefficient unit, and an eighth 8-coefficient unit out of 64 coefficient units (8x8-coefficient unit).

Next, a processing of determining the examination unit based on the set temporary significant coefficient flags to generate the significant coefficient flag thereof is described. First, if the temporary significant coefficient flag of the 2-coefficient unit is "0000" or "1111" in the 8-coefficient unit (step S15: YES), the examination unit is set to the 8-coefficient unit (step S16). Incidentally, "0000" and "1111" represent the temporary significant coefficients for each 2-coefficient unit. In this case, a result of the logical OR operation of the determination flags corresponding to (coefficient/2) as the examination unit is set as the significant coefficient flag.

Next, if the temporary significant coefficient flag of the 2-coefficient unit is "00??" or "11??" with respect to the 8-coefficient unit ("?" represents "1" or "0") (step S17: YES), the four coefficients (4-coefficient unit) are selected in ascending order of the coefficient index CI and this 4-coefficient unit is set as the examination unit (step S18) . On the other hand, if the temporary significant coefficient flag of the 2-coefficient unit is not "00??" or "11??" with respect to the 8-coefficient unit (step S17: NO), the examination units for the four coefficients with the smaller coefficient index CI are set to the 2-coefficient unit (step S19).

Next, if the temporary significant coefficient flag of the 2-coefficient unit is "??00" or "??11" with respect to the 8-coefficient unit (step S20: YES), and the 8-coefficient unit to be currently examined has the coefficient index CI = 0 to 7, the four coefficients with the coefficient index CI=4 to 7 (4-coefficient unit) are set as the examination unit (step S21). On the other hand, if the temporary significant coefficient flag of the 2-coefficient unit is not "??00" or "??11" with respect to the 8-coefficient unit (step S20: NO), examination units for the four coefficients coefficient with the index CI= 4 to 7 are set as the 2-coefficient unit (step S22). A result of the logical OR operation of the determination flags set for coefficients in the set examination units is used as a significant coefficient flag. Then, a processing subsequent to step S12 is repeated until the coefficient index CI=max is reached (step S23). As for CASES of Fig. 14, the above process is repeated 8 times to determine the 64-coefficient examination unit to derived the significant coefficient flag.

In Fig. 14, as for the first 8 coefficients, the temporary significant coefficient flag of the 2-coefficient unit is "1111", so the examination unit is set to the 8-coefficient unit, and the significant coefficient flag is set to "1". As for the second 8 coefficients, the temporary significant coefficient flag of the 2-coefficient unit is "1101", and the 4-coefficient unit, the 2-coefficient unit, and the 2-coefficient unit are set to the examination unit, and significant coefficient flags of each examination unit are set to "1", "0", and "1".

In steps S16, S18, S19, S21, and S22 of Fig. 12, a processing of Fig. 13 is further executed. In Fig. 14, the 2, 4, and 8-coefficient units are collectively referred to as "a" coefficient unit. As shown in Fig. 12, after the examination unit is set, the significant coefficient flag generator 54 stores the examination unit identifier for identifying the examination unit ("a" coefficient unit) (step S21), and determines whether or not the significant coefficient flag of the examination unit is 0 (step S22). Then, if the significant coefficient flag is "1", the significant coefficient flag "1" is output together with the examination unit identifier stored in step S21. Further, the quantization coefficients corresponding to the examination unit are output from the quantization coefficient temporary FIFO 31 through the output switch 35. On the other hand, if the significant coefficient flag is "0", the significant coefficient flag "0" is only output together with the examination unit identifier stored in step S21.

Table 4 below shows a result of comparing the related art with this embodiment. In CASE5 of Fig. 14, the quantization coefficients to be stored in the quantization coefficient FIFO are equivalent to 26 words, and the 14 examination units are generated and set, so the significant coefficient flag FIFO stores the examination unit identifier of 28 bits and the significant coefficient flag of 14 bits.

**Table 4**

| | Original Data | Third Embodiment | Related Art |
|---|---|---|---|
| CASE 5 (8x8) | 64 word | 26 word+ (28 bit+14 bit) | 44 word |

In this embodiment as well, in the non-zero coefficient detector, before the quantization FIFO stores the quantization coefficients, it is determine whether or not there is a significant coefficient for each predetermined unit (examination unit). Then, only in the case where the examination unit includes a non-zero coefficient, the quantization FIFO stores the quantization coefficient. Further, if all coefficients in the examination unit are zero coefficient, the quantization FIFO does not store the quantization coefficient. Then, the zero coefficient generator generates a zero coefficient with reference to the significant coefficient flag. Thus, it is possible to increase the number of quantization coefficients to be stored without increasing the capacity of the quantization FIFO for storing the quantization coefficients from the variable length coder/decoder. As a result, a processing is carried out earlier than a subsequent image decoder, making it possible to average the processing speed and increase an apparent processing speed.

Further, in this embodiment, the temporary significant coefficient flag is generated for the 2, 4, and 8-coefficient units under the condition that the maximum examination unit W2_max=8, and the examination unit is set such that the significant coefficient flag becomes "0", that is, a compression efficiency is further improved. In this way, two or more examination units of different sizes are prepared for the quantization coefficient sequence including a predetermined number of quantization coefficients, and it is determined whether or not the non-zero coefficient is included for each of the predetermined number of quantization coefficient sequences on the examination unit basis. Then, the examination unit is set such that the number of significant coefficients in the quantization coefficient sequence desirably becomes the smallest or at least is reduced down to a garget predetermined number or less. Through this processing, the examination unit is selected in accordance with the compressed image data to improve the compression efficiency to realize a small memory capacity. Alternatively, a larger number of quantization coefficients can be stored in the memory the capacity of which is the same as the conventional one.

Further, the variable length coder/decoder has only to output the quantization coefficient based on the variable length code, and thus is applicable to a general-purposed structure as well as the compressed bit stream structure. Further, even if there is no zero coefficient, a size of data stored in the quantization coefficient FIFO never increases.

It is apparent that the present invention is not limited to the above embodiment that may be modified and changed without departing from the scope and spirit of the invention. For example, the above embodiments describe the hardware component, but the invention is not limited thereto. A desired processing can be performed by a CPU (central processing unit) executing a computer program. In this case, a computer program may be provided in the form of being recorded on a recording medium or transferred via the Internet or other such transfer medium.

## Claims

1. A data decoding apparatus, comprising:
a quantization coefficient output unit for decoding compressed data including a variable length code obtained through variable length coding to output a quantization coefficient;
an examining unit for examining whether or not the quantization coefficient output from the quantization coefficient output unit includes a non-zero coefficient for each examination unit;
a coefficient memory for storing, if the examination unit includes one or more non-zero coefficients, the quantization coefficient of the examination unit as a significant coefficient; and
a zero-coefficient generating unit for reconstructing the quantization coefficient based on an examination result from the examining unit and the significant coefficient.

2. The data decoding apparatus according to claim 1, wherein the examining unit includes:
an examination memory for temporarily storing a quantization coefficient of the examination unit; and
an examination result generating unit for determining whether or not at least the examination unit stored in the examination memory is the significant coefficient, and
the examination result generating unit outputs a significant coefficient flag representing whether or not the examination unit is the significant coefficient as the examination result, and outputs, when it is determined that the examination unit is the significant coefficient, a quantization coefficient stored in the examination memory as the significant coefficient.

3. The data decoding apparatus according to claim 2, further comprising an examination result memory for storing the examination result,
wherein the zero-coefficient generating unit reconstructs the quantization coefficient by reading the significant coefficient from the coefficient memory based on the significant coefficient flag of the examination result or generating zero coefficients corresponding to the examination unit.

4. The data decoding apparatus according to claim 1, wherein the examining unit sets two or more examination units of different sizes for a quantization coefficient sequence including a predetermined number of quantization coefficients, and examine whether or not the set examination units include a non-zero coefficient, and the zero-coefficient generating unit reconstructs the quantization coefficient based on the set examination units.

5. The data decoding apparatus according to claim 4, wherein the examining unit and the zero-coefficient generating unit reference an examination unit table listing two or more examination unit of different sizes to set the examination unit for the quantization coefficient sequence.

6. The data decoding apparatus according to claim 4, wherein a subsequent examination unit in the quantization coefficient sequence out of the two or more examination units of different sizes is equal to or larger than a previous examination unit in the quantization coefficient sequence.

7. The data decoding apparatus according to claim 2, wherein the examination result generating unit selects and sets one of two or more examination units of different sizes for a quantization coefficient sequence including a predetermined number of quantization coefficients, and outputs an examination unit identifier that indicates the set examination unit and a significant coefficient flag as the examination result and outputs the significant coefficient from the examination memory based on the significant coefficient flag, and
the zero-coefficient generating unit reconstructs the quantization coefficient by reading the significant coefficient from the coefficient memory based on the examination unit identifier and the significant coefficient flag or generating zero coefficients corresponding to the set examination unit.

8. The data decoding apparatus according to claim 7, wherein the examination result generating unit examines whether or not a non-zero coefficient is included for each quantization coefficient sequence on a basis of examination unit, and determines an examination unit based on the examination result such that the number of significant coefficients in the quantization coefficient sequence is reduced down to a predetermined number or smaller.

9. The data decoding apparatus according to claim 2, further comprising an decoding unit for generating a decoded signal based on the quantization coefficient reconstructed with the zero-coefficient generating unit.

10. An data decoding method, comprising:
decoding compressed data including a variable length code obtained through variable length coding to output a quantization coefficient;
examining whether or not the quantization coefficient includes a non-zero coefficient for each examination unit;
storing in a coefficient memory, if the examination unit includes one or more non-zero coefficients, the quantization coefficient of the examination unit as a significant coefficient; and
reconstructing the quantization coefficient based on an examination result from the examining unit and the significant coefficient stored in the coefficient memory.

11. The data decoding method according to claim 10, wherein the examining whether or not the quantization coefficient includes:
temporarily storing a quantization coefficient of the examination unit in an examination memory;
determining whether or not at least the examination unit stored in the examination memory is the significant coefficient;
generating and outputting a significant coefficient flag representing whether or not the examination unit is the significant coefficient as the examination result; and
outputting, when it is determined that the examination unit is the significant coefficient, a quantization coefficient stored in the examination memory as the significant coefficient.

12. The data decoding method according to claim 10, wherein the examining whether or not the quantization coefficient includes setting two or more examination units of different sizes for a quantization coefficient sequence including a predetermined number of quantization coefficients, and
the reconstructing the quantization coefficient includes executing reconstruction of the quantization coefficient based on the examination units set upon the examination.

13. The data decoding method according to claim 10, wherein the examining whether or not the quantization coefficient includes:
selecting and setting one of two or more examination units of different sizes for a quantization coefficient sequence obtained by decoding compressed data; and
outputting an examination unit identifier that indicates the set examination unit and a significant coefficient flag as the examination result and outputting the significant coefficient from the examination memory based on the significant coefficient flag, and
the reconstructing the quantization coefficient includes executing reconstruction of the quantization coefficient by reading the significant coefficient from the coefficient memory based on the examination unit identifier and the significant coefficient flag or generating zero coefficients corresponding to the set examination unit.

14. The data decoding method according to claim 10, wherein the examining whether or not the quantization coefficient includes:
determining whether or not includes a non-zero coefficient is included for each quantization coefficient sequence obtained by decoding compressed data and including a predetermined number of quantization coefficients, for at least a first examination unit and a second examination unit larger than the first examination unit;
setting, if the first and second examination units are both the significant coefficients, the second examination unit as the examination unit;
setting, if one of the first and second examination units is the significant coefficient, the first examination unit as the examination unit; and
outputting an examination unit identifier that indicates the set examination unit and a significant coefficient flag as the examination result, and outputting the significant coefficient from the examination memory based on significant coefficient flag, and
the reconstructing the quantization coefficient includes executing reconstruction of the quantization coefficient by reading the significant coefficient from the coefficient memory based on the examination unit identifier and the significant coefficient flag or generating zero coefficients corresponding to the set examination unit.

15. The data decoding method according to claim 10, further comprising generating a decoded signal based on the output quantization coefficient.
